# EUROPÄISCHE PATENTSCHRIFT

(11) **EP 2 785 582 B1**
(45) Veröffentlichungstag und Bekanntmachung des Hinweises auf die Patenterteilung: **12.07.2017**
(21) Anmeldenummer: 12794245.6
(22) Anmeldetag: 21.11.2012
(51) Int. Cl.: B62M 11/14, B62M 6/55

(54) **ELEKTRISCHER HILFSANTRIEB FÜR EIN FAHRRAD**
ELECTRIC AUXILIARY DRIVE FOR A BICYCLE
ENTRAÎNEMENT AUXILIAIRE ÉLECTRIQUE POUR BICYCLETTE

(30) Priorität: 01.12.2011 DE 102011087544
(43) Veröffentlichungstag der Anmeldung: 08.10.2014
(73) Patentinhaber: Continental Automotive GmbH, 30165 Hannover (DE)
(72) Erfinder: HANNEWALD, Thomas, 64347 Griesheim (DE)
(86) Internationale Anmeldenummer: PCT/EP2012/073175
(87) Internationale Veröffentlichungsnummer: WO 2013/079372

(56) Entgegenhaltungen:
- WO-A1-2007/083995
- WO-A2-99/30960
- DE-A1- 19 629 788
- DE-A1-102009 045 447

## Beschreibung

Die Erfindung betrifft einen elektrischen Hilfsantrieb für ein Fahrrad mit einem Elektromotor, mit einem Planetengetriebe, mit einer Tretkurbeln aufweisenden Tretkurbelwelle und mit einem Antriebsritzel, wobei das Antriebsritzel wahlweise gemeinsam oder getrennt über den Elektromotor und die Tretkurbeln antreibbar ist.

Solche Hilfsantriebe werden zur Unterstützung des Antriebs über die Tretkurbeln eingesetzt und sind beispielsweise unter dem Namen Pedelecs bekannt.

Aus der DE 10 2009 045 447 A1 ist beispielsweise ein solcher Hilfsantrieb bekannt geworden, bei dem der Elektromotor die Tretkurbelwelle konzentrisch umschließt. Das Planetengetriebe ist axial neben dem Elektromotor angeordnet und treibt das Antriebsritzel an. Das Antriebsritzel wiederum treibt über eine Kette das Hinterrad des Fahrrades an. Die mit den Tretkurbeln verbundene Tretkurbelwelle treibt einen Träger von Planetenrädern des Planetengetriebes an.

Nachteilig bei dem bekannten Hilfsantrieb ist, dass auch bei abgeschaltetem Elektromotor und reinem Antrieb des Fahrrades über die Tretkurbeln das Planetengetriebe bewegt werden muss. Dies führt zu einem erhöhten Kraftaufwand beim Antrieb des Fahrrades über die Tretkurbeln. Weiterhin erfordert der elektrische Hilfsantrieb wegen der Anordnung von Elektromotor und Planetengetriebe einen sehr großen axialen Bauraum. Dieser große axiale Bauraum verhindert, dass mehrere Antriebsritzel zum Antrieb der Kette nebeneinander angeordnet werden können.

DE 19629788 A1 offenbart einen gattungsgemäßen elektrischen Hilfsantrieb.

Der Erfindung liegt das Problem zugrunde, einen elektrischen Hilfsantrieb der eingangs genannten Art so weiter zu bilden, dass er besonders kompakt aufgebaut ist und störende Bauteile im Bereich des Antriebsritzels weitgehend vermeidet.

Dieses Problem wird erfindungsgemäß dadurch gelöst, dass ein Stator des Elektromotors in axialer Richtung zumindest die Breite des Planetengetriebes hat und dass das Planetengetriebe vollständig radial innerhalb des Elektromotors angeordnet ist,dass das Planetengetriebe über einen Freilauf mit der Tretkurbelwelle verbunden ist, wobei der Freilauf beim Betrieb des Elektromotors das Planetengetriebe mit der Tretkurbelwelle verbindet und beim ausschließlichen Antrieb über die Tretkurbel an der Tretkurbelwelle die Verbindung löst und dass der Freilauf mit einem Planetenradträger des Planetengetriebes verbunden ist.

Durch diese Gestaltung lassen sich störende Bauteile des elektrischen Hilfsantriebs axial neben dem Elektromotor vermeiden. Daher können wie bei Fahrrädern üblich zwei oder drei Antriebsritzel zum Antrieb der Kette des Fahrrades nebeneinander angeordnet sein. Durch die Anordnung des Planetengetriebes radial innerhalb des Elektromotors gestaltet sich der erfindungsgemäße elektrische Hilfsantrieb besonders kompakt. Der Elektromotor lässt sich zudem besonders breit und damit leistungsstark gestalten. Eine Bewegung des Planetengetriebes ohne Betrieb des Elektromotors lässt sich zu dem vermeiden. Durch diese Gestaltung stehen sämtliche Bauteile des Elektromotors und des Planetengetriebes bei außer Betrieb befindlichem Elektromotor still und müssen beim reinen Tretkurbelantrieb nicht mitbewegt werden. Damit lässt sich das mit dem erfindungsgemäßen elektrischen Hilfsantrieb ausgestattete Fahrrad besonders komfortabel durch den Tretkurbelantrieb bewegen.

Weiterhin gestaltet sich der elektrische Hilfsantrieb in radialer Richtung besonders kompakt und die Leistung des Elektromotors von den Planetenrädern wird direkt auf die Tretkurbelwelle übertragen.

Zur Vereinfachung der Montage des erfindungsgemäßen elektrischen Hilfsantriebes trägt es bei, wenn das Planetengetriebe und der Elektromotor ein gemeinsames Gehäuse aufweisen und wenn das Gehäuse die Tretkurbelwelle umschließt. Ein den erfindungsgemäßen elektrischen Hilfsantrieb aufweisendes Fahrrad benötigt hierdurch lediglich eine Aufnahme für das Gehäuse.

Zur weiteren Vereinfachung der Montage des erfindungsgemäßen elektrischen Hilfsantriebs trägt es bei, wenn das Gehäuse sämtliche Lagerungen der Tretkurbelwelle hat. Durch diese Gestaltung lässt sich das Gehäuse mit dem Elektromotor, dem Planetengetriebe und der Tretkurbel zu einer vormontierten Baugruppe zusammenfassen und montieren. Die vormontierte Baugruppe kann damit als Ersatz für eine bekannte Tretkurbellagerung am Fahrrad montiert werden.

Ein vorgesehenes Übersetzungsverhältnis des Elektromotors zu der Tretkurbelwelle lässt sich gemäß einer anderen vorteilhaften Weiterbildung der Erfindung einfach einstellen, wenn das Hohlrad mit dem Gehäuse und das Sonnenrad mit dem Rotor des Elektromotors verbunden ist.

Separate Lagerungen für den Rotor des Elektromotors lassen sich gemäß einer anderen vorteilhaften Weiterbildung der Erfindung vermeiden, wenn das Sonnenrad des Planetengetriebes auf der Tretkurbelwelle gelagert ist. Durch diese Gestaltung ist, sofern die Verbindung des Rotors mit dem Sonnenrad steif gestaltet ist, der Rotor auf der Tretkurbelwelle gelagert. Im günstigsten Fall benötigen der Rotor und das Sonnenrad keine weiteren Lagerungen. Der erfindungsgemäße elektrische Hilfsantrieb weist hierdurch besonders wenige zu montierende Bauteile auf und lässt sich kostengünstig fertigen.

Zur Vereinfachung der Montage des erfindungsgemäßen elektrischen Hilfsantriebs an dem Fahrrad trägt es bei, wenn das Gehäuse, der Elektromotor, das Planetengetriebe mit dem Freilauf, die Tretkurbelwelle mit den Lagerungen am Gehäuse und eine elektronische Steuerung mit einem Anschluss für eine Stromversorgung eine vormontierbare bauliche Einheit bilden. Weiterhin lassen sich hierdurch die wesentlichen Bauteile des erfindungsgemäßen elektrischen Hilfsantriebs einfach auf einem Prüfstand vor der Montage am Fahrrad testen. Am einfachsten ist es, nach der Montage der vormontierten baulichen Einheit am Fahrrad ein an einer beliebigen Stelle am Fahrrad montierter Akkupack über eine elektrische Leitung mit dem Anschluss zu verbinden.

Ein Verkabelungsaufwand für den Elektromotor lässt sich gemäß einer anderen vorteilhaften Weiterbildung der Erfindung besonders gering halten, wenn ein Steuergehäuse mit der elektronischen Steuerung an dem den Elektromotor mit dem das Planetengetriebe aufnehmenden Gehäuse angeordnet ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in:
- Fig. 1: schematisch ein Fahrrad mit einem erfindungsgemä-ßen elektrischen Hilfsantrieb,
- Fig. 2: einen Längsschnitt durch den erfindungsgemäßen elektrischen Hilfsantrieb aus Figur 1.

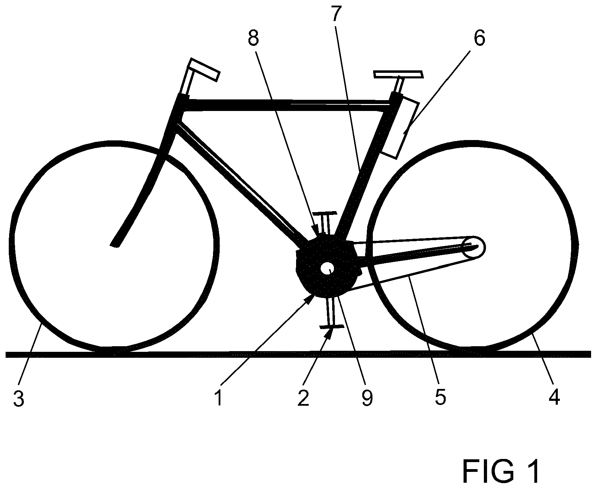

Figur 1 zeigt ein Fahrrad mit einem elektrischen Hilfsantrieb 1, mit Tretkurbeln 2 und mit zwei Rädern 3, 4. Ein Hinterrad 4 des Fahrrades ist über eine Kette 5 antreibbar. Der elektrische Hilfsantrieb 1 ist mit einem Akkupack 6 als Stromquelle verbunden. Das Fahrrad hat einen Rahmen 7 mit einer Aufnahme 8 für den elektrischen Hilfsantrieb 1. Die Aufnahme 8 ist konzentrisch zu einer Tretkurbelwelle 9 angeordnet.

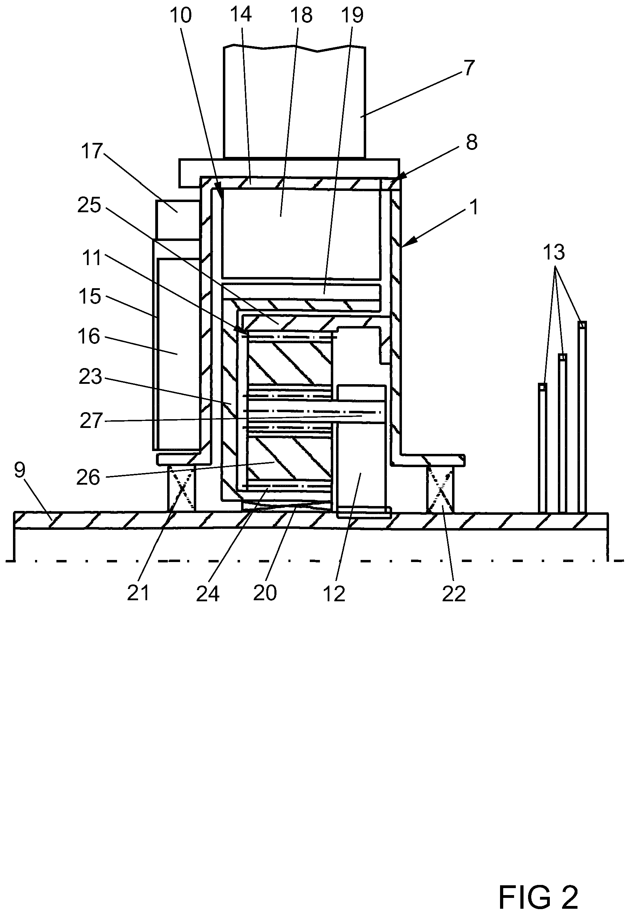

Figur 2 zeigt einen Längsschnitt durch den elektrischen Hilfsantrieb 1 mit der Tretkurbelwelle 9. Der elektrische Hilfsantrieb 1 hat einen konzentrisch zu der Tretkurbelwelle 9 angeordneten Elektromotor 10. Der Elektromotor 10 umschließt ein Planetengetriebe 11. Zur Vereinfachung der Zeichnung sind die in Figur 1 dargestellten Tretkurbeln 2, welche drehfest mit der Tretkurbelwelle 9 verbunden sind, nicht dargestellt. Das Planetengetriebe 11 ist über einen Freilauf 12 mit der Tretkurbelwelle 9 verbunden. Auf der Tretkurbelwelle 9 sind mehrere Antriebsritzel 13 zum Antrieb der in Figur 1 dargestellten Kette 5 angeordnet. Ein Gehäuse 14 des elektrischen Hilfsantriebs 1 ist in der Aufnahme 8 des Rahmens 7 befestigt. An dem Gehäuse 14 ist ein Steuergehäuse 15 mit einer elektronischen Steuerung 16 für den Elektromotor 10 angeordnet. Ein ebenfalls am Steuergehäuse 15 angeordneter Anschluss 17 ermöglicht eine nicht näher dargestellte elektrische Verbindung mit der als Akkupack 6 ausgebildeten Stromquelle aus Figur 1.

Der Elektromotor 10 hat einen in dem Gehäuse 14 befestigten Stator 18 und einen drehbar gelagerten Rotor 19. Der Stator 18 weist nicht näher dargestellte Spulen und der Rotor 19 Permanentmagnete auf. Der Rotor 19 ist mittels einer Lagerung 20 auf der Tretkurbelwelle 9 gelagert. Die Tretkurbelwelle 9 hat Lagerungen 21, 22 in dem Gehäuse 14. Das Planetengetriebe 11 hat ein über eine Scheibe 23 mit dem Rotor 19 verbundenes Sonnenrad 24 und ein an dem Gehäuse 14 befestigtes Hohlrad 25. Zwischen dem Sonnenrad 24 und dem Hohlrad 25 sind Planetenräder 26 auf einem Planetenradträger 27 drehbar gelagert. Der Freilauf 12 ermöglicht beim Betrieb des Elektromotors 10 eine formschlüssige oder kraftschlüssige Verbindung des Planetenradträgers 27 mit der Tretkurbelwelle 9 und damit einen Antrieb der Antriebsritzel 13 über den Elektromotor 10. Damit ist beispielsweise ein unterstützender Antrieb der Tretkurbelwelle 9 durch den Elektromotor 12 möglich. Ist der Elektromotor 12 abgeschaltet, ist die Verbindung zwischen dem Planetenradträger 27 und der Tretkurbelwelle 9 gelöst und die Antriebsritzel 13 lassen sich über die auf der Tretkurbelwelle 9 befestigten Tretkurbeln 2 antreiben. Das Planetengetriebe 11 wird beim ausschließlichen Antrieb der Tretkurbelwelle 9 über die Tretkurbeln 2 nicht bewegt.

## Patentansprüche

1. Elektrischer Hilfsantrieb (1) für ein Fahrrad mit einem Elektromotor (10), mit einem Planetengetriebe (11), mit einer Tretkurbeln (2) aufweisenden Tretkurbelwelle (9) und mit einem Antriebsritzel (13), wobei das Antriebsritzel (13) wahlweise gemeinsam oder getrennt über den Elektromotor (10) und die Tretkurbeln (2) antreibbar ist, ein Stator (18) des Elektromotors (10) in axialer Richtung zumindest die Breite des Planetengetriebes (11) hat und dass das Planetengetriebe (11) vollständig radial innerhalb des Elektromotors (10) angeordnet ist, **dadurch gekennzeichnet, dass** das Planetengetriebe (11) über einen Freilauf (12) mit der Tretkurbelwelle (9) verbunden ist, wobei der Freilauf (12) beim Betrieb des Elektromotors (10) das Planetengetriebe (11) mit der Tretkurbelwelle (9) verbindet und beim ausschließlichen Antrieb über die Tretkurbel (2) an der Tretkurbelwelle (9) die Verbindung löst und dass der Freilauf (12) mit einem Planetenradträger (27) des Planetengetriebes (11) verbunden ist.

2. Elektrischer Hilfsantrieb nach Anspruch 1, **dadurch gekennzeichnet, dass** das Planetengetriebe (11) und der Elektromotor (10) ein gemeinsames Gehäuse (14) aufweisen und dass das Gehäuse (14) die Tretkurbelwelle (9) umschließt.

3. Elektrischer Hilfsantrieb nach Anspruch 2, **dadurch gekennzeichnet, dass** das Gehäuse (14) sämtliche Lagerungen (22, 23) der Tretkurbelwelle (9) hat.

4. Elektrischer Hilfsantrieb nach Anspruch 1, **dadurch gekennzeichnet, dass** das Hohlrad (25) mit dem Gehäuse (14) und das Sonnenrad (24) mit dem Rotor (19) des Elektromotors (10) verbunden ist.

5. Elektrischer Hilfsantrieb nach einem der Ansprüche 1 und 4, **dadurch** g**ekennzeichnet**, dass das Sonnenrad (24) des Planetengetriebes (11) auf der Tretkurbelwelle (9) gelagert ist.

6. Elektrischer Hilfsantrieb nach einem der Ansprüche 1, 4 und 5, **dadurch gekennzeichnet, dass** das Gehäuse (14), der Elektromotor (10), das Planetengetriebe (11) mit dem Freilauf (12), die Tretkurbelwelle (9) mit den Lagerungen (22, 23) am Gehäuse (14) und eine elektronische Steuerung (16) mit einem Anschluss (17) für eine Stromversorgung eine vormontierbare bauliche Einheit bilden.

7. Elektrischer Hilfsantrieb nach Anspruch 6, **dadurch gekennzeichnet, dass** ein Steuergehäuse (15) mit der elektronischen Steuerung (16) an dem den Elektromotor (10) mit dem Planetengetriebe (11) aufnehmenden Gehäuse (14) angeordnet ist.

## Claims

1. Electrical auxiliary drive (1) for a bicycle with an electric motor (10) with a planetary gear (11), with a pedal crank shaft (9) having pedal cranks (2) and with a drive pinion (13), wherein the drive pinion (13) is optionally operable jointly or separately via the electric motor (10) and the pedal cranks (2), a stator (18) of the electric motor (10) is in the axial direction at least the width of the planetary gear (11) and the planetary gear (11) is arranged completely radially within the electric motor (10) **characterised in that** the planetary gear (11)is connected to the pedal crank shaft (9) by way of a freewheel (12), wherein when the electric motor (10) is in operation the freewheel (12) connects the planetary gear (11) to the pedal crank shaft (9) and undoes the connection at the pedal crank shaft (9) during propulsion exclusively via the pedal cranks (2), and **in that** the freewheel (12) is connected to a planetary wheel carrier (27) of the planetary gear (11).

2. Electrical auxiliary drive according to claim 1 **characterised in that** the planetary gear (11) and the electric motor (10) have a common casing (14) and **in that** the housing (14) encompasses the pedal crank shaft (9).

3. Electrical auxiliary drive according to claim 2 **characterised in that** the housing (14) has all the bearings (22, 23) of the pedal crank shaft (9).

4. Electrical auxiliary drive according to claim 1 **characterised in that** the hollow wheel (25) is connected to a housing (14) and the sun wheel (24) is connected to the rotor (19) of the electric motor (10).

5. Electrical auxiliary drive according to any one of claim 1 and 4 **characterised in that** the sun wheel (24) of the planetary gear (11) is borne on the pedal crank shaft (9).

6. Electrical auxiliary drive according to any one of claims 1, 4 and 5 **characterised in that** the housing (14), the electric motor (10), the planetary gear (11) with the freewheel (12), the pedal crank shaft (9) with the bearings (22, 23) on the housing (14) and an electronic control (16) with a connection (17) for a power supply form a pre-assembled structural entity.

7. Electrical auxiliary drive according to claim 6 **characterised in that** a control housing (15) with the electronic control (16) is arranged on the housing (14) accommodating the electric motor (10) with the planetary gear (11).

## Revendications

1. Entraînement auxiliaire électrique (1) pour une bicyclette comprenant un moteur électrique (10), comprenant un engrenage planétaire (11), comprenant un arbre de pédalier (9) qui possède un pédalier (2) et comprenant un pignon d'entraînement (13), le pignon d'entraînement (13) pouvant être entraîné, au choix, conjointement ou séparément par le moteur électrique (10) et le pédalier (2), un stator (18) du moteur électrique (10) possédant dans le sens axial au moins la largeur de l'engrenage planétaire (11) et l'engrenage planétaire (11) étant disposé dans le sens radial entièrement à l'intérieur du moteur électrique,
**caractérisé en ce que** l'engrenage planétaire (11) est relié à l'arbre de pédalier (11) par le biais d'une roue libre (12), la roue libre (12) reliant l'engrenage planétaire (11) à l'arbre de pédalier (9) lors du fonctionnement du moteur électrique (10) et libérant la liaison au niveau de l'arbre de pédalier (9) lors de l'entraînement exclusif par le biais du pédalier (2), et **en ce que** la roue libre (12) est reliée à un porte-satellite (27) de l'engrenage planétaire (11).

2. Entraînement auxiliaire électrique selon la revendication 1, **caractérisé en ce que** l'engrenage planétaire (11) et le moteur électrique (10) possèdent un carter (14) commun et **en ce que** le carter (14) entoure l'arbre de pédalier (9).

3. Entraînement auxiliaire électrique selon la revendication 2, **caractérisé en ce que** le carter (14) comporte tous les paliers (22, 23) de l'arbre de pédalier (9).

4. Entraînement auxiliaire électrique selon la revendication 1, **caractérisé en ce que** la couronne de train planétaire (25) est reliée au carter (14) et la roue solaire (24) au rotor (10) du moteur électrique.

5. Entraînement auxiliaire électrique selon l'une des revendications 1 à 4, **caractérisé en ce que** la roue solaire (24) de l'engrenage planétaire (11) est montée sur l'arbre de pédalier (9).

6. Entraînement auxiliaire électrique selon l'une des revendications 1, 4 et 5, **caractérisé en ce que** le carter (14), le moteur électrique (10), l'engrenage planétaire (11) avec la roue libre (12), l'arbre de pédalier (9) avec les paliers (22, 23) sur le carter (14) et une commande électronique (16) munie d'une borne (17) pour une alimentation électrique forment une unité structurelle qui peut être prémontée.

7. Entraînement auxiliaire électrique selon la revendication 6, **caractérisé en ce qu'**un boîtier de commande (15) comprenant la commande électronique (16) est disposé sur le carter (14) qui accueille le moteur électrique (10) avec l'engrenage planétaire (11).
